**Europäisches Patentamt**

**European Patent Office**

**Office européen des brevets**

(11) Veröffentlichungsnummer: **0 105 154**
A1

(12) **EUROPÄISCHE PATENTANMELDUNG**

(21) Anmeldenummer: **83108123.7**

(22) Anmeldetag: **17.08.83**

(51) Int. Cl.³: **C 04 B 31/02,** C 08 L 61/24, C 08 L 61/06, C 08 L 97/02

(30) Priorität: **25.08.82 DE 3231500**

(43) Veröffentlichungstag der Anmeldung: **11.04.84** **Patentblatt 84/15**

(84) Benannte Vertragsstaaten: **AT BE CH FR GB IT LI LU NL SE**

(71) Anmelder: **Fulgurit GmbH & Co. Kommanditgesellschaft, Postfach 1208, D-3050 Wunstorf 1 (DE)**

(72) Erfinder: **Dietrich, Johannes, Dipl.-Ing., Steinweg 9, D-4837 Verl 1 (DE)**

(74) Vertreter: **Wehser, Wulf, Dipl.-Ing. et al, Patentanwälte Wehser & Fleuchaus Roscherstrasse 12, D-3000 Hannover 1 (DE)**

㉞ Mit organischen und/oder anorganischen Bindemitteln gebundene Bauteile.

(57) Ein mit organischen und/oder anorganischen Bindemitteln, wie Zement oder Kunststoffen, gebundenes und mit Bewehrungen, wie Fasern, versehenes Bauteil soll ohne nennenswerte Verringerung der Festigkeit durch Zusätze so weit nichtbrennbar gemacht werden, dass die Brandklasse A2 nach DIN 4102 erreicht wird. Ausserdem soll gleichzeitig die Toxizität der Rauchgase verringert werden.

Hierzu ist erfindungsgemäss vorgesehen, dass das Bauteil einen Anteil von 20 bis 70% Manganoxyd ($MnO_2$) aufweist.

ACTORUM AG

0105154

**WEHSER & FLEUCHAUS**
PATENTANWÄLTE

— / —

DIPL.-ING. WULF WEHSER
3000 Hannover 1
Roscherstraße 12
☎ 0511 – 34 14 49
Privat: 0 53 08 – 23 15

DIPL.-ING. LEO FLEUCHAUS
8000 München 71
☎ 0 89 – 79 28 00

Hannover, 17. August 1982

Fulgurit GmbH & Co. Kommanditgesellschaft, 3050 Wunstorf 1

F 321 - Ws/Me

Mit organischen und/oder anorganischen Bindemitteln gebundene Bauteile

Die Erfindung betrifft mit organischen und/oder anorganischen Bindemitteln, wie Zement oder Kunststoffen, gebundene und mit Bewehrungen, wie Fasern, versehene Bauteile, vorzugsweise Bauplatten, insbesondere Holzzementplatten.

Bei Bauteilen und Bauplatten dieser Art besteht die Schwierigkeit, eine Brennbarkeit zu erreichen, die den Vorschriften nach DIN 4102 entspricht, wobei insbesondere eine Nichtbrennbarkeit gemäß Brandklasse A2 dieser DIN-Vorschrift erreicht werden soll.

Hierzu ist es bereits bekannt, bei Holzzementplatten Zusätze von Boraten, Phosphaten, Karbonaten, Chloriden usw. vorzusehen. Mit Zusätzen dieser Art wird entweder die Nichtbrennbarkeit mit einer

0105154

zum Teil nicht unerheblichen Verringerung der Festigkeit der
Bauplatten erkauft oder es wird die notwendige Verringerung der
Toxizität der Rauchgase nicht erreicht.

Der Erfindung liegt demgemäß die Aufgabe zugrunde, Bauteile oder
Bauplatten der eingangs genannten Art zu schaffen, deren Festigkeit trotz der Hinzufügung von Zusätzen nicht oder nicht wesentlich beeinträchtigt ist und bei welchen außerdem die Toxizität der
Rauchgase unter Einhaltung der vorgeschriebenen Nichtbrennbarkeit
verringert ist.

Diese Aufgabe wird erfindungsgemäß dadurch gelöst, daß die Bauteile
oder Bauplatten einen Anteil von 20 bis 70 % Manganoxyd $(MnO_2)$ aufweisen.

Mit diesem Bestandteil wird in überraschender Weise ein Bauteil oder
eine Bauplatte geschaffen, die ohne weiteres die Nichtbrennbarkeit nach
der obengenannten DIN-Vorschrift Brandklasse A2 erreicht, ohne daß
die Festigkeit nennenswert beeinträchtigt ist. Außerdem ist bei
dem erfindungsgemäßen Bauteil die Toxizität der Rauchgase gegenüber einem Bauteil ohne diesen Bestandteil erheblich, nämlich auf
etwa 1/10 verringert.

Bei Anwendung der erfindungsgemäßen Zusammensetzung auf eine Holzzementplatte kommen etwa folgende Anteilsbereiche in Betracht:

Beispiel 1:

Holzfasern etwa 8 bis 20 %

Zement etwa 10 bis 70 %

Manganoxyd etwa 20 bis 70 %

Als besonders vorteilhaft hat sich hierbei folgendes Mischungsverhältnis erwiesen:

Beispiel 2:

Holzfasern etwa 12 %

Zement etwa 48 %

Manganoxyd etwa 40 %

Die weitere Anwendung der erfindungsgemäßen Zusammensetzung verdeutlichen die folgenden Beispiele:

Beispiel 3:

Kunstharzgebundene Holzspanplatte

Holzspäne etwa 60 %

Harnstoffharz + Härter etwa 10 %

Manganoxyd etwa 30 %

- 4 -

Beispiel 4:

    Wasserglasgebundene Spanplatte

| | |
|---|---|
| Holzspäne | etwa 35 % |
| Natronwasserglas + Härter | etwa 35 % |
| Manganoxyd | etwa 30 % |

Beispiel 5:

    Kunstharzgebundene Glimmerplatte

| | |
|---|---|
| Glimmer, Muskovit | etwa 65 % |
| Phenolharz + Härter | etwa 5 %. |
| Manganoxyd | etwa 30 % |

Beispiel 6:

    Zementgebundene Celluloseplatte

| | |
|---|---|
| Celluloseaufschlämmung in Wasser | etwa 7 % |
| Portlandzement | etwa 56 % |
| Manganoxyd | etwa 37 % |

Zusätzlich zu dem Bestandteil Manganoxyd können weitere Zusätze vorgesehen sein, insbesondere Zusätze zur weiteren Erhöhung der Festigkeit der Bauteile oder Bauplatten, wie beispielsweise Ameisensäure (HCOOH). Als vorteilhaft hat sich ein additiver Zusatz von etwa 5 % Ameisensäure erwiesen.

Ferner können Zusätze von Aluminiumsulfat $\left(Al_2 \left(SO_4\right)_3 \cdot XH_2O\right)$ und Wasserglas verwendet werden.

**WEHSER & FLEUCHAUS**

PATENTANWÄLTE

~ / ~

3000 Hannover 1
Roscherstraße 12
℡ 05 11 – 34 14 49
Privat: 0 53 08 – 23 15

DIPL.-ING. LEO FLEUCHAUS
8000 München 71
℡ 0 89 – 79 28 00

Hannover, **17. August 1982**

Fulgurit GmbH & Co. Kommanditgesellschaft, 3050 Wunstorf 1

F 321 - Ws/Me

A n s p r ü c h e

1. Mit organischen und/oder anorganischen Bindemitteln, wie Zement oder Kunststoffen, gebundene und mit Bewehrungen, wie Fasern, versehene Bauteile, vorzugsweise Bauplatten, dadurch gekennzeichnet, daß die Bauteile oder Bauplatten einen Anteil von etwa 20 bis 70 % Manganoxyd $(MnO_2)$ aufweisen.

2. Bauteile nach Anspruch 1, dadurch gekennzeichnet, daß die Bauteile Holzzementplatten sind und eine Zusammensetzung von etwa 8 bis 20 % Holzfasern, von etwa 10 bis 70 % Zement und von etwa 20 bis 70 % Manganoxyd aufweisen.

3. Bauteile nach Anspruch 2, dadurch gekennzeichnet, daß die Bauteile eine Zusammensetzung von etwa 12 % Holzfasern, von etwa 48 % Zement und von etwa 40 % Manganoxyd aufweisen.

- 2 -

4. Bauteile nach Anspruch 1, dadurch gekennzeichnet, daß die Bauteile kunstharzgebundene Holzspanplatten sind und eine Zusammensetzung von etwa 60 % Holzspänen, von etwa 10 % Harnstoffharz + Härter und von etwa 30 % Manganoxyd aufweisen.

5. Bauteile nach Anspruch 1, dadurch gekennzeichnet, daß die Bauteile wasserglasgebundene Spanplatten sind und eine Zusammensetzung von etwa 35 % Holzspänen, von etwa 35 % Natronwasserglas + Härter und von etwa 30 % Manganoxyd aufweisen.

6. Bauteile nach Anspruch 1, dadurch gekennzeichnet, daß die Bauteile kunstharzgebundene Glimmerplatten sind und eine Zusammensetzung von etwa 65 % Glimmer, von etwa 5 % Phenolharz + Härter und von etwa 30 % Manganoxyd aufweisen.

7. Bauteile nach Anspruch 1, dadurch gekennzeichnet, daß die Bauteile zementgebundene Celluloseplatten sind und eine Zusammensetzung von etwa 7 % Celluloseaufschlämmung in Wasser, von etwa 56 % Portlandzement und von etwa 37 % Manganoxyd aufweisen.

8. Bauteile nach einem der vorhergehenden Ansprüche, dadurch gekennzeichnet, daß der jeweiligen Mischung Ameisensäure zugesetzt ist.

0105154

9. Bauteile nach Anspruch 8, dadurch gekennzeichnet, daß ein additiver Zusatz von etwa 5 % Ameisensäure vorgesehen ist.

10. Bauteile nach einem der vorhergehenden Ansprüche, dadurch gekennzeichnet, daß Zusätze von Aluminiumsulfat und Wasserglas vorgesehen sind.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | US-A-3 055 831  (I.BARNETT) *Ansprüche 4-6,16-18; Spalte 5, Zeilen 21-32 und 48-51; Spalte 5, Zeile 66 - Spalte 6, Zeile 4* | 1-5 | C 04 B  31/02 C 08 L  61/24 C 08 L  61/06 C 08 L  97/02 |
| | --- | | |
| X,Y | DE-C-  182 283  (J.HENNINGS et al.) *Anspruch* | 1 | |
| | --- | | |
| X,Y | US-A-3 630 822  (A.E.CARMELLINI) *Anprüche 1,4; Spalte 1, Zeilen 34-38; Spalte 2, Zeilen 40-50; Spalte 3, Zeilen 1-5* | 1,4,6 | |
| | --- | | |
| Y | FR-A-  738 437  (L.C.F.PECHIN) *Seite 1, Zeilen 31-37 und 58-62* | 1 | **RECHERCHIERTE SACHGEBIETE (Int. Cl. ³)** |
| | --- | | |
| Y | DE-C-  937 635  (M.GROSKOPF) *Ansprüche 1,2,6* | 1,10 | C 04 B  13/00 C 04 B  31/00 |
| | --- | | |
| Y | CH-A-  216 902  (DURISOL) *Anspruch I,2,13* | 1-3,10 | C 04 B  25/00 C 09 K   3/00 C 08 L  97/00 |
| | --- | | |
| Y | DE-A-1 915 240  (DUFRETHI) *Ansprüche 1,4* | 1,8 | |
| | --- | | |
| A | US-A-1 530 533  (K.WINKLER) *Ansprüche 1,3* | 1,10 | |
| | ---             -/- | | |

Der vorliegende Recherchenbericht wurde für alle Patentansprüche erstellt.

| Recherchenort | Abschlußdatum der Recherche | Prüfer |
|---|---|---|
| DEN HAAG | 02-12-1983 | DAELEMAN P.C.A. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

**Europäisches Patentamt**

# EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 011 900 (W.T.GLAB) | | |
| A | US-A-4 083 789 (A.W.MOGAN et al.) | | |
| A | FR-E- 92 327 (COMP. DE ST.GOBAIN) | | |

RECHERCHIERTE SACHGEBIETE (Int. Cl. ³)

Der vorliegende Recherchenbericht wurde für alle Patentansprüche erstellt.

| Recherchenort DEN HAAG | Abschlußdatum der Recherche 02-12-1983 | Prüfer DAELEMAN P.C.A. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82